Europäisches Patentamt

European Patent Office

Office européen des brevets

(19)

(11) Publication number: **0 048 902**
A2

# EUROPEAN PATENT APPLICATION

(12)

(21) Application number: 81107385.7

(22) Date of filing: 18.09.81

(51) Int. Cl.³: **H 01 G 7/02,** H 04 R 19/00

(30) Priority: 25.09.80 JP 132359/80
25.09.80 JP 132360/80

(43) Date of publication of application: 07.04.82
Bulletin 82/14

(84) Designated Contracting States: CH DE FR GB LI NL

(71) Applicant: TOKYO SHIBAURA DENKI KABUSHIKI
KAISHA, 72, Horikawa-cho Saiwai-ku, Kawasaki-shi
Kanagawa-ken 210 (JP)

(72) Inventor: Tamura, Sakae, 366-40, Hamano-cho,
Chiba-shi Chiba-ken (JP)
Inventor: Fujiwara, Shigeru, Kuroda-so, 2-82 Furuichiba,
Saiwa-ku Kawasaki-shi (JP)

(74) Representative: Blumbach Weser Bergen Kramer
Zwirner Hoffmann Patentanwälte, Radeckestrasse 43,
D-8000 München 60 (DE)

(54) Method for manufacturing electret device and condenser type electro-acoustic transducer having electrets.

(57) The invention discloses a method for manufacturing an electret device having the steps of preparing a dielectric material film (11) having metal layers (12, 12') on both surfaces; applying, by a power applying circuit, a DC voltage across said metal layers (12, 12'); and opening the power applying circuit while the DC voltage is being applied to stop applying the DC votlage, thereby obtaining an electret.

Also disclosed is a condenser type electro-acoustic transducer having electrets as the stationary electrodes (21, 21') which are provided by this method.

# BLUMBACH · WESER · BERGEN · KRAMER
## ZWIRNER · HOFFMANN

0048902

### PATENTANWÄLTE IN MÜNCHEN UND WIESBADEN

Patentconsult Radeckestraße 43 8000 München 60 Telefon (089) 883603/883604 Telex 05-212313 Telegramme Patentconsult
Patentconsult Sonnenberger Straße 43 6200 Wiesbaden Telefon (06121) 562943/561998 Telex 04-186237 Telegramme Patentconsult

TOKYO SHIBAURA DENKI KABUSHIKI KAISHA          81/8776 EPC

- 1 -

## Method for manufacturing electret device and condenser type electro-acoustic transducer having electrets

The present invention relates to a method for manufacturing an electret device and a condenser type electro-acoustic transducer having electret devices manufactured by this method.

In general, an electret is defined to mean a product formed by applying permanently staying electric polarization to a dielectric material which has not spontaneous polarization.

Thus defined electrets may be classified into electrets whose piezoelectric property and pyroelectric property are utilized, and electrets whose surface potential generated by the electric polarity is utilized.

The former type of electret which utilizes the piezoelectric and pyroelectric properties is obtained generally by forming two electrodes on both major surfaces of the dielectric element, heating the dielectric element to a predetermined temperature, applying a DC voltage to polarize the element, and then disconnecting the source of the applied voltage (for discharging the electrodes). In this kind of electret, the surface potential cannot be utilized since there are no lines of electric force. However, the piezoelectric and pyroelectric properties can be utilized.

On the other hand, the latter type of electret is

München: R. Kramer Dipl.-Ing. · W. Weser Dipl.-Phys. Dr. rer. nat. · E. Hoffmann Dipl.-Ing.
Wiesbaden: P. G. Blumbach Dipl.-Ing. · P. Bergen Prof. Dr. jur. Dipl.-Ing., Pat.-Ass., Pat.-Anw. bis 1979 · G. Zwirner Dipl.-Ing. Dipl.-W.-Ing.

0048902

applied as a source of polarization voltage for an electrostatic microphone, electrostatic headphones or the like. Further, the latter type of electret can be utilized for equipment which requires an electrostatic conversion from an electric to a mechanical signal, or from a mechanical to an electric signal, and proves very useful.

A thermal electret forming method and an electro-electret forming method are generally used to manufacture these electrets. However, when these methods are used, the surface is not charged uniformly, and the surface potential is not always controlled sufficiently.

In Japanese Patent No. 809,619, a method for fabricating an electret is disclosed in which one specific metal layer such as an Fe-Ni metal layer is formed on one surface or both surfaces of a dielectric material film, and a DC current is applied to the dielectric material film to form an electret. However, in this method, when a DC current is applied to the above laminated body, the body is heated to about 100°C. Further, an electric charge which accumulates when the voltage is applied to the metal layer is discharged through a power applying circuit when the applied voltage drops to zero. Therefore, the surface potential of the obtained electret becomes extremely small as opposed to the applied DC voltage. For example, in Example 1 of the above-mentioned Japanese patent, a metal layer of 2 μ to 5 μ thickness was formed by vapor deposition on both surfaces of a tetrafluoroethylene-hexafluoropropylene copolymer film or the like, and a DC voltage of 6,000 V was applied to the metal layer while the metal layer was heated 130°C at a rate of 5°C/min and then maintained at 130°C for 20 minutes. The metal layer was then cooled at a rate of about 10°C/min to room temperature, and the applied voltage dropped zero, thus yielding an electret. The surface potential (electret voltage) of the obtained electret was 450 V when the metal layer was aluminum and 760 V when the metal layer was an Fe-Ni alloy. The surface potential of the obtained electret was extremely small in contrast to the applied voltage of 6,000 V.

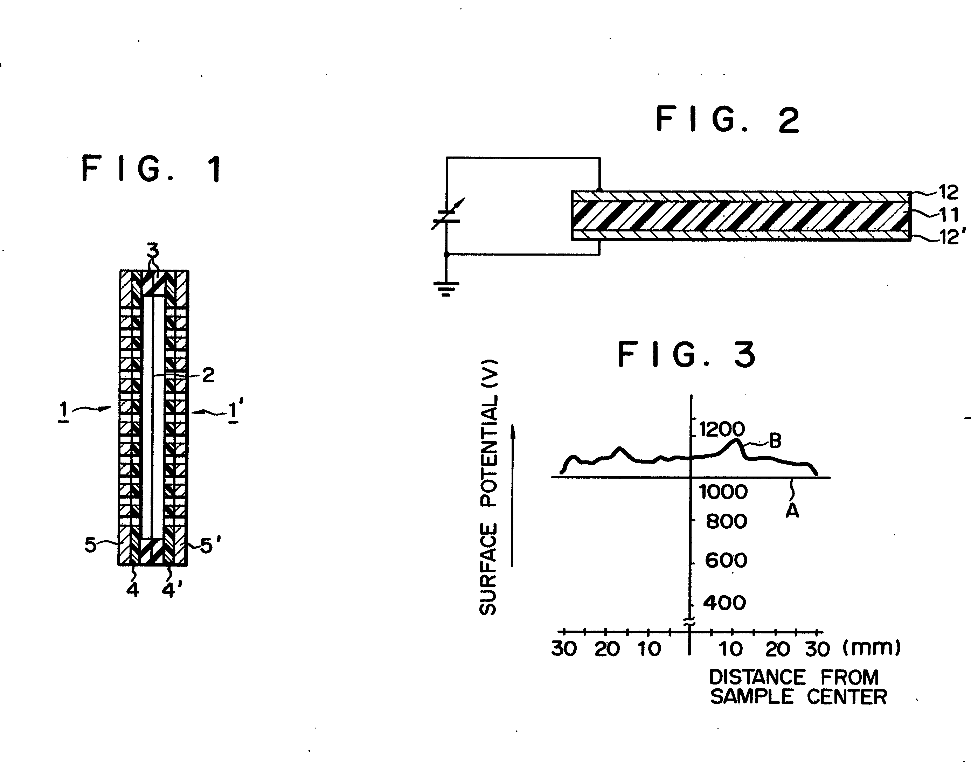

Fig. 1 shows a conventional condenser type electro-acoustic transducer which has stationary electrodes comprising electrets. Reference numerals 1 and 1' denote a pair of stationary electrodes which oppose each other and are spaced apart by a spacer 3. A vibration electrode 2 is formed between the stationary electrodes. The stationary electrodes 1 and 1' comprise electret films 4 and 4' opposing the vibration electrode 2, and metal layers 5 and 5' bonded to these electret films 4 and 4'. High harmonic distortion of the electro-acoustic transducer with the above-described construction is thought to be caused by nonuniformity in the mechanical characteristics of the vibration electrode, nonuniformity of the surface potential of the electret films constituting the stationary electrodes, and partial nonuniformity in the width of an air gap between the vibration electrode and the stationary electrodes. The mechanical characteristics of the vibration electrode are relatively improved since the techniques of forming and utilizing a plastic thin film have been improved, so that a vibration electrode having relatively uniform mechanical characteristics is obtained. However, the surface potential of the stationary electrodes using electrets is not always uniform.

One object of the present invention is to provide a method for manufacturing an electret device in which the surface potential on an electret is uniformly distributed and the surface potential is well controlled in correspondence with the applied voltage.

Another object of the present invention is to provide a condenser type electro-acoustic transducer having electrets which reduces high harmonic distortions.

According to one aspect of the present invention, a method for manufacturing an electret device is provided comprising the steps of preparing a dielectric material film having metal layers on both surfaces; applying, by a power applying circuit, a DC voltage across said metal layers; and opening the power applying circuit while the DC voltage is being applied to stop applying the DC voltage, thereby obtaining an electret.

According to another aspect of the present invention, a condenser type electro-acoustic transducer is provided, comprising a vibration electrode and stationary electrodes which consist of electret devices and which are formed at both sides of said vibration electrode at a distance therefrom, said electret devices comprising electret films having metal layers on both surfaces thereof.

In this transducer, the above electret device is obtained by forming into an electret a laminated body comprising a dielectric material film and metal layers formed on both surfaces of this film.

This invention can be more fully understood from the following detailed description when taken in conjunction with the accompanying drawings, in which:

Fig. 1 is a sectional view of a conventional condenser type electro-acoustic transducer having electrets;

Fig. 2 is a sectional view illustrating the method according to the present invention;

Figs. 3 and 4 are graphs illustrating electret characteristics obtained by the method according to the present invention;

Figs. 5a to 5e are sectional views of modifications of an electret fabricated by a method according to the present invention;

Fig. 6 is a sectional view of one embodiment of a condenser type electro-acoustic transducer having electrets according to the present invention; and

Fig. 7 is a graph showing the characteristics of an electro-acoustic transducer according to the present invention.

The method of the present invention is characterized in that a DC voltage is applied by a power applying circuit to metal layers integrally formed on both surfaces of a dielectric material film as the electret forming material, the power applying circuit is opened while the voltage is being applied, thus reducing the applied voltage to zero (while the electric charge accumulated by the applied voltage remains) and yielding electret.

According to the above-described method of the present invention, the surface potential of the electret is controlled corresponding to the applied voltage.

In the present invention, the dielectric material as the electret material to which the DC current is applied includes materials such as a tetrafluoroethylene-hexafluoropropylene copolymer, polytetrafluoroethylene, polyethylene, polypropylene, polyvinylidene fluoride and polymethyl methacrylate.

In the first step of the method for fabricating an electret according to the present invention, an adhesive may generally be used as a means for forming the metal layers on the electret material film. However, heat sealing may easily be used for this purpose when the electret material can be heat-sealed with a metal.

The second step in the formation of the electret can be accomplished at room temperature and an arbitrary voltage may arbitrarily be applied to the electret material if the applied voltage is less than the dielectric breakdown voltage of the material.

The thickness of the dielectric material layer is preferalby in the range of 5 μm to 1 mm. The metal layer may be formed of aluminum, copper, brass or stainless steel, and the thickness of the metal layer is, in practice, in the range of 0.1 μm to 1 mm.

One embodiment of the present invention will be described with reference to Fig. 2. Reference numeral 11 denotes an FEP-Teflon film (trade name of tetrafluoroethylene-hexafluoropropylene copolymer film by Du Pont). Aluminum layers 12 and 12' of 0.5 mm thickness are laminated on both surfaces of the film 11. The laminated body is disk-shaped with a 60 mm diameter. A DC voltage of 1 kV is applied by a power applying circuit to the aluminum layer 12 for one second while the other aluminum layer 12' is grounded. The power applying circuit is opened to drop the applied voltage to zero, thus forming the dielectric film 11 into an electret. The surface potential of the obtained electret is uniformly distributed as shown by curve A in Fig. 3.

Curve B in Fig. 3 shows the distribution of the surface potential of an FEP-Teflon film having no metal layers when the film is formed into an electret by the conventional method of corona discharge.

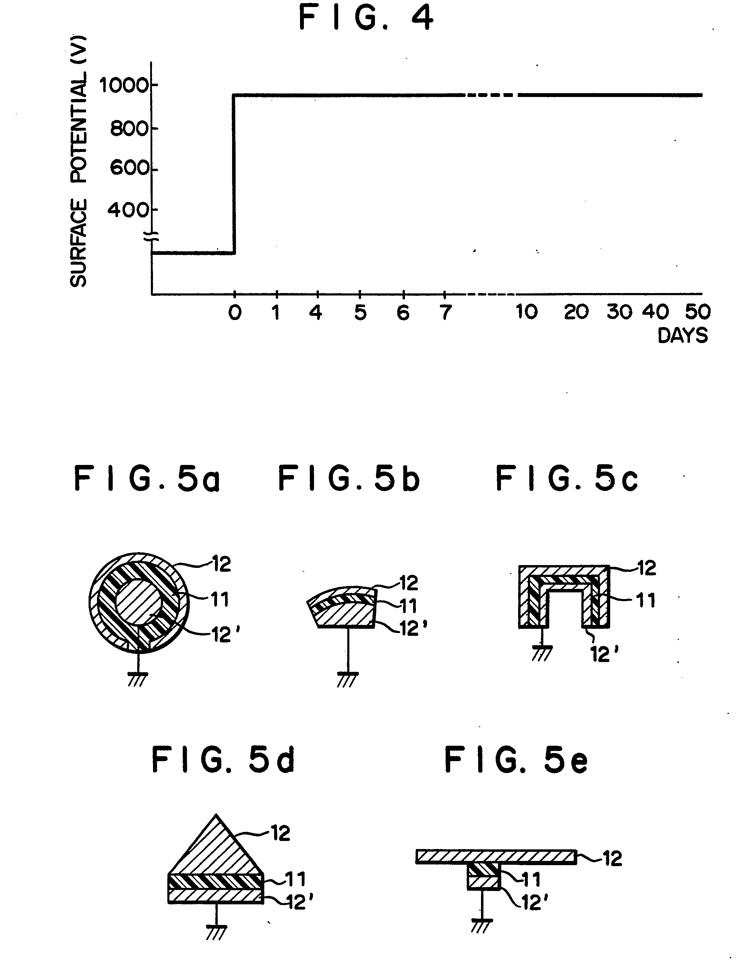

Fig. 4 is a graph showing electret characteristics in relation to time of the electret obtained by the embodiment of the present invention. When a predetermined DC voltage is applied to the film, extremely stable characteristics (surface potential) can be obtained.

Further, the method of the present invention has an advantage in that the potential at the electret surface can be controlled corresponding to the applied voltage. As shown in the above embodiment, when a DC voltage of 1 kV is applied, a potential of about 1 kV on the electret surface can be obtained. When a DC voltage of 800 V is applied, an electret having a surface potential of 800 V is easily guaranteed.

In the method for fabricating an electret according to the present invention, an electret is obtained in which the distribution of the surface potential is uniform, the electret characteristic in relation to time is excellent, and the surface potential is easily controlled and is obtained corresponding to the applied voltage.

In an electret obtained according to the method of the present invention, it is considered that charges on the metal layers are stabilized by polarization charges near the surfaces of the electret body, so that the shape of the electret may be arbitrarily selected, such as spherical, partially cylindrical, or cubic; examples are shown in Fig. 5(a), 5(b), 5(c), 5(d) and 5(e). The electret of this type can be utilized in wide applications. Therefore, the method according to the present invention has, in practice, a wide application range.

Reference numerals in Fig. 5 denote the same parts as in Fig. 2.

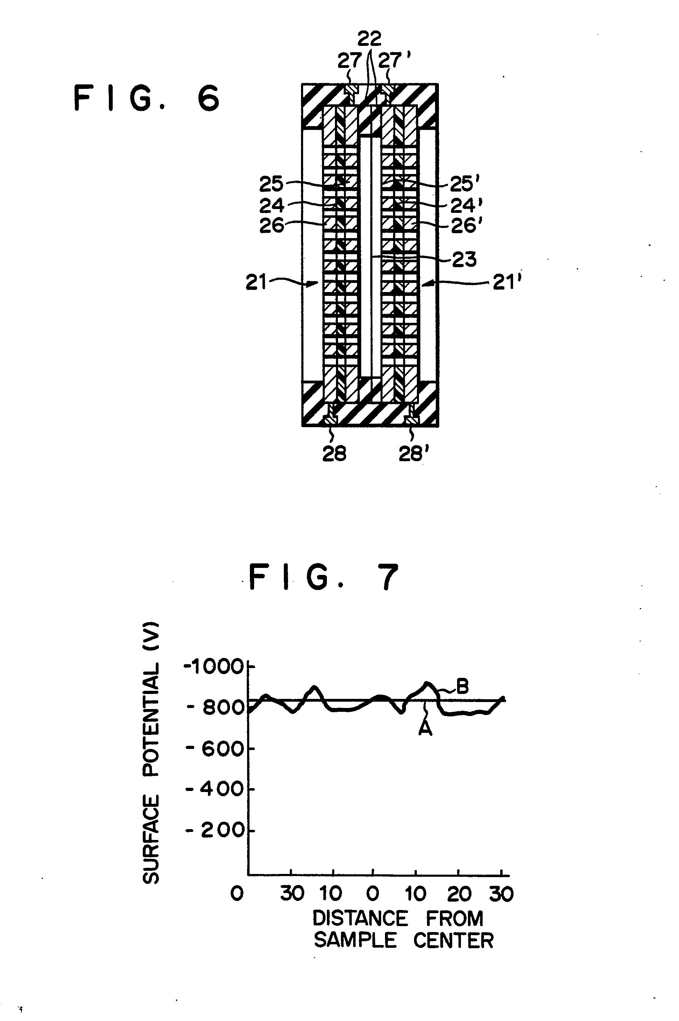

Referring to Fig. 6, one embodiment of the condenser type electro-acoustic transducer according to the present invention will be described. Reference numerals 21 and 21' denote a pair of stationary electrodes which oppose each other and are spaced apart by a spacer 22. A vibration electrode 23 which is made of a polyester film of 4 μm thickness and which deposits aluminum is interposed between the stationary electrodes 21 and 21'. A laminated body having metal layers bonded to both surfaces of a dielectric material film is formed into an electret. Thus obtained electret is preferably used for each of the stationary electrodes 21 and 21'. For example, Aℓ layers 25, 25', 26 and 26' of 0.5 mm thickness are adhered to both surfaces of FEP-Tflon films 24 and 24' of 75 μm thickness. The laminated body thus obtained is punched to form a disk having a diameter of 70 mm. 140 air holes of 2 mm diameter are formed on the disk as shown in Fig. 6. Reference numerals 27 and 27' denote terminals connected to the inner Aℓ layers 25 and 25' respectively opposing the vibration electrodes 23. These terminals are used for applying a DC voltage. Reference numerals 28 and 28' denote terminals used for inputting or outputting an AC signal and the terminals 28 and 28' are respectively connected to the outer Aℓ layers 26 and 26'.  The terminals 28 and 28' for inputting or outputting the AC signal are grounded while a DC voltage of -1,000 V is applied to the terminals 27 and 27' for applying the DC voltage, so that the FEP-Teflon films 24 and 24' are formed into electrets.  The Teflon films 24 and 24' may be formed into electrets before the metal layers are adhered by a means such as the thermal electret forming method or the electro-electret forming method.

According to the above electret forming methods, when an electret is degraded over a long period of application and the surface potential is reduced, a DC voltage can be applied by using the terminals 27, 27' 28 and 28' to restore the predetermined surface potential. As a comparative example, an electret whose surface potential is -960 V is obtained by forming a metal sheet on one surface of a dielectric body by corona discharge.  An electret condenser type electro-acoustic transducer is obtained in the same manner as the method of the above-described embodiment, except that the above comparative electret is used for the stationary electrodes as shown in Fig. 1.

The distributions of the surface potentials of the staionary electrodes of the above embodiment (curve A) and the comparative example (curve B) were examined and the results obtained are shown in Fig. 7.

Ten units of electret condenser type electro-acoustic transducers obtained by the above process were prepared and 10 units of conventional electret condenser type electro-acoustic transducers obtained as shown in Fig. 1 were also prepared.  An electric signal of about 1 W was supplied to transducers of the two types, which were normally operated.  High harmonic distortion frequency characteristics and output sound pressure frequency characteristics were measured in the two different types of transducers.

As a result, the distortion ratio of all of the electret condenser type electro-acoutstic transducer of the present invention was less than 0.3%, and the surface potential of the stationary electrodes was uniformly distributed. On the other hand, the distortion ratio of the conventional electret condenser type electro-acoustic transducers varied from 1 to 5%. The output sound pressure levels of all of the electret condenser type electro-acoustic transducers of the present invention were in the range of 89 dB to 90 dB. On the other hand, those of the conventional electret condenser type electro-acoustic transducers varied from 86 dB to 91 dB.

As is apparent from the embodiment of the present invention, the uniform surface potential of the electret is obtained by using an electret film having metal layers on both surfaces as the stationary electrodes. Further, the stationary electrodes are smooth so that a uniform air gap over the entire surface of the stationary electrodes is obtained. Therefore, high harmonic distortion of the condenser type electro-acoustic transducer having electrets is prevented. By the present invention, an electret condenser type electro-acoustic transducer with extremely low high harmonic distortion can be provided. The prevent invention also provides a condenser type electro-acoutstic transducer having electrets with small fluctuations in the output voltage. A condenser type electro-acoustic transducer having an electret material may be assembled first, and the material may then be formed into the electrets since the terminals for applying the voltage are connected to the metal layers corresponding to the sides opposing the vibration electrode. Even when the surface potential is lowered by some trouble, the electrets can be charged again without disassembling the electret condenser type electro-acoustic transducer.

In the electret condenser type electro-acoustic transducer according to the present invention, the

0048902

electrets are respectively charged with different polarities to increase the conversion efficiency by 6 dB, thus providing a practical electret condenser type electro-acoustic transducer.

The electret condenser type electro-acoustic transducer according to the present invention is not limited to the push-pull type transducer as shown in the embodiment, but may be extended to the single type transducer to obtain the same effect.

- 1 -    0048902

Claims:

1. A method for manufacturing an electret device comprising the steps of preparing a dielectric material film (11) having metal layers (12, 12') on both surfaces; applying, by a power applying circuit, a DC voltage across said metal layers (12, 12'); and opening the power applying circuit while the DC voltage is being applied to stop applying the DC voltage, thereby obtaining an electret.

2. A method for manufacturing an electret according to claim 1, wherein the DC voltage is applied at room temperature.

3. An electret device manufactured by a method according to claim 1.

4. A condenser type electro-acoustic transducer comprising a vibration electrode (23) and stationary electrodes (21, 21') which consist of electret devices and which are formed at both sides of said vibration electrode (23) at a distance therefrom, said electret devices comprising electret films (24, 24') having metal layers (25, 25', 26, 26') thereon.

5. A condenser type clectro-acoustic transducer according to claim 4, wherein said electret device is obtained by forming into an electret a laminated body of a dielectric material film (24, 24') having metal layers (25, 25', 26, 26') formed on both surfaces thereof.

6. A consenser type electro-acoustic transducer according to claim 4, wherein said metal layers (25, 25') opposing said vibration electrode (23) have terminals (27, 27') for applying the voltage.

FIG. 1

FIG. 2

FIG. 3

SURFACE POTENTIAL (V)

1200
1000
800
600
400

30  20  10        10  20  30  (mm)

DISTANCE FROM
SAMPLE CENTER

1/3

0048902

# FIG. 4

# FIG. 5a    FIG. 5b    FIG. 5c

# FIG. 5d    FIG. 5e

F I G. 6

F I G. 7